# EUROPEAN PATENT APPLICATION

(11) **EP 4 560 438 A1**
(43) Date of publication of application: **28.05.2025**
(21) Application number: 23212007.1
(22) Date of filing: 24.11.2023
(51) Int. Cl.: G06F 3/01, G02B 27/01, G06F 1/16

(54) **AN HMI, METHODS OF OPERATING AN HMI AND OPERATING A TARGET DEVICE BY MEANS OF AN HMI, A SYSTEM COMPRISING AN HMI AND A TARGET DEVICE AND A COMPUTER PROGRAM PRODUCT**

(71) Applicant: Deutsche Telekom AG, 53113 Bonn (DE)
(72) Inventor: VAN DEN BERGE, Fridtjof, 53227 Bonn-Oberkassel (DE)
(74) Representative: RDL Patentanwälte PartG mbB

(57) **Abstract**

A method of operating a human machine interface, HMI, wherein a screen of a HMI displays a graphical user interface, GUI, comprising a virtual control element; a trigger sensor of the HMI captures a triggering activity of a user, the triggering activity activating the virtual control element, and provides a trigger signal corresponding to the captured triggering activity; and a control unit of the HMI receives the provided trigger signal and, caused by the received trigger signal, executes a function assigned to the virtual control element, a method of operating a target device using a HMI, an HMI, a system comprising an HMI and a target device, and a computer program product.

## Description

The invention relates to a method of operating a human machine interface, HMI, wherein a screen of a HMI displays a graphical user interface, GUI, comprising a virtual control element; a trigger sensor of the HMI captures a triggering activity of a user, the triggering activity activating the virtual control element, and provides a trigger signal corresponding to the captured triggering activity; and a control unit of the HMI receives the provided trigger signal and, caused by the received trigger signal, executes a function assigned to the virtual control element. The invention further relates to a method of operating a target device, an HMI, a system comprising an HMI and a target device and a computer program product.

Methods of the type initially mentioned form part of the state of the art and common embodiments thereof are usually implemented by terminal devices in order to enable users of the terminal devices for comfortably interacting with the terminal devices.

A control unit of a terminal device may cause a touchscreen of the terminal device to display a GUI. The GUI usually comprises a virtual control element, i.e., a graphical icon assigned to a function of the terminal device. The function may be alternatively provided by a device separate from the terminal device, more precisely separate from the control unit of the HMI, the separate device being generally referred to as a target device herein.

The touchscreen detects the displayed virtual control element to be touched by the user and provides the control unit with a touch signal corresponding to the touch. The control unit, upon receiving the touch signal, causes the function to be executed. Within this embodiment of the method, the touchscreen simultaneously acts as the screen and the trigger sensor of the HMI, and the touch of the user is captured as the triggering activity.

Using this widely spread HMI for interacting with the terminal device, the user is required to touch the touchscreen of the terminal device which is usually done by means of a hand of the user, particularly at least one finger of the hand. The touchscreen restricts the triggering activity to an essentially two-dimensional interaction region defined by the surface of the touchscreen, thus, requiring the terminal device to be within a reach of the user.

Accordingly, the user has to be close to the terminal device and the hand of the user is prevented from doing something else while using the HMI. Modern HMls additionally comprise a microphone and a voice recognition module and are configured for accepting voice commands of the users instead of touches. Voice commands indeed allow the user for staying distant of the touchscreen, i.e., remotely using the HMI, and the hand to do something else while using the HMI. However, voice commands may be not feasible in certain situations or cumbersome to handle in case the GUI comprises a plurality of virtual control elements to be simultaneously displayed.

It is, therefore, an object of the invention to suggest a method of operating an HMI, which allows the user for activating a virtual control element displayed by a remote screen of a HMI easily and in any situation. Further objects of the invention are to suggest a method of operating a target device and providing an HMI, a system comprising an HMI and a target device and a computer program product.

A first aspect of the invention is a method of operating a human machine interface, HMI, wherein a screen of a HMI displays a graphical user interface, GUI, comprising a virtual control element; a trigger sensor of the HMI captures a triggering activity of a user, the triggering activity activating the virtual control element, and provides a trigger signal corresponding to the captured triggering activity; and a control unit of the HMI receives the provided trigger signal and, caused by the received trigger signal, causes a function assigned to the virtual control element to be executed. The screen may be touch-sensitive, i.e., configured as a touch screen. The GUI may be configured as a virtually three-dimensional GUI, i.e., comprising a plurality of virtually stacked layers, the virtual control element forming part of an active layer of the virtually stacked layers. The HMI may maximize the active layer and minimize each remaining layer. Alternatively, the HMI may move the active layer on top of the stacked layers, i.e., to the foreground and each remaining layer virtually behind the active layer, i.e., to the background. The virtual control element may comprise an icon, a button, a slider and the like. Of course, the GUI may comprise a plurality of virtual control elements potentially arranged on different layers of the GUI. The triggering activity comprises an action intentionally performed by the user in order to have the function executed, i.e., a command action.

According to the invention, the triggering activity contactlessly activates the virtual control element; a selection sensor of the HMI captures a selecting activity of the user different from the triggering activity, the selecting activity contactlessly selecting the virtual control element, and provides a selection signal corresponding to the captured selecting activity; and the control unit receives the provided selection signal and, caused by the received trigger signal, causes the function to be executed. The contactless activation of the virtual control element releases a finger and, hence, a hand of the user from approaching the screen. As a result, any manual activity performed by the user is not affected by performing the triggering activity. In other words, the HMI is not any longer restricted to the two-dimensional surface of the screen but extended into a third spatial dimension perpendicular to the surface of the screen. The three-dimensional extension of the HMI allows for a greater choice and flexibility of defining operating activities of the HMI, i.e., selecting activities and triggering activities, which even increases by defining combinations thereof.

Apart from that, activation of the virtual control element requires both a selecting activity and a triggering activity wherein the triggering activity requires the selecting activity to be effective. It is noted that separate activities for selecting and for triggering are essentially different from touching the screen, the touching comprising both selecting the virtual control element and triggering the activation thereof.

The trigger sensor may capture a brain wave of the user or a physical motion of the user as the triggering activity. The trigger sensor may be configured as a cap with electrodes, an electrode cap for short, the electrodes being arranged and configured to detect electric currents within a brain of the user. Wearing the cap, the user is only required to think of activating the virtual control element, the thought being the triggering activity. The trigger sensor may also be configured as a motion sensor comprising a mechanical sensor, e.g., an acceleration sensor or a position sensor immediately capturing the physical motion or an optical sensor, e.g., a camera capturing a video of the physical motion.

In an embodiment, the selection sensor captures a spatial orientation of a face of the user or an orientation of an eye of the user towards the virtual control element as the selecting activity. The selection sensor may be configured as an optical sensor, e.g., a camera capturing the face of the user as a whole or the eye of the user.

In another embodiment, the trigger sensor captures a movement of a hand of the user, a movement of an arm of the user, a movement of a head of the user, a movement of a leg of the user, a movement of a foot of the user, a movement of an eye of the user, a movement of an eyelid of the user, a movement of an eyebrow of the user, a mimic movement of a face of the user, a thought of the user or a combination thereof as the triggering activity. The listed triggering activities are exemplarily only. Any different triggering activity which is not restricted to the screen may be used instead.

A distance sensor of the HMI may detect a spatial distance of the distance sensor from the virtual control element and provides a distance signal corresponding to the detected spatial distance, and the control unit may receive the provided distance signal and causes the function to be executed when the distance signal matches the virtual control element. The detected distance may be physical, e.g., a spatial distance of the screen from the distance sensor or a spatial mark of a determined mark of the HMI from the distance sensor, the determined mark arranged at a distance from the distance sensor. Alternatively, the detected distance may be at least partially virtual, e.g., comprise a depth of a layer within a plurality of stacked layers of the GUI.

In an embodiment a function of the HMI is executed. For instance, activation of a different layer of the GUI may be executed as the function.

Another aspect of the invention is a method of operating a target device, wherein a function of a target device at least partially separate from the HMI and operatively coupled to a HMI is caused by the HMI to be executed. The target device may comprise a component of the HMI but not the complete HMI. In other words, at least one component of the HMI does not form part of the target device.

According to the invention, the HMI carries out a method according to an embodiment of the invention. The target device is operated remotely by means of the HMI, i.e., hands-free.

A third aspect of the invention is a human-machine interface, HMI, comprising a screen, a selection sensor, a trigger sensor and a control unit. The screen may be touch-sensitive, i.e., configured as a touchscreen, the touchscreen forming both the selection sensor and the trigger sensor and being operatively coupled to the control unit.

According to the invention, the HMI is configured for carrying out a method according to an embodiment of the invention, when the screen, the selection sensor and the trigger sensor are operatively coupled to the control unit. Accordingly, the selection sensor and the trigger sensor are separate from each other and from the screen. Triggering activities and selecting activities are not restricted to the screen, the touch-sensitivity of which is not used for operating the HMI.

In a preferred embodiment, the HMI comprises a head-mounted device, HMD, wherein the HMD comprises the screen, the selection sensor and the control unit. The HMD may be configured as smart glasses or virtually reality, VR, glasses.

The HMD may comprise the trigger sensor and/or a distance sensor. The HMD may comprise the complete HMI resulting in a high compactness of the HMI.

Alternatively, the HMI may comprise a sensory device separate from the HMD, the sensory device configured for being wirelessly coupled to the HMD, particularly using a Bluetooth protocol, a WLAN protocol or an NFC protocol, and comprising the trigger sensor and/or a distance sensor. The HMI is configured as a system comprising the HMD and the separate sensory device wherein both the HMD and the sensory device comprise respective communication units allowing for a wireless connection of the sensory device to the HMD.

The sensory device advantageously comprises smart cloths, a smart glove, a smart watch, a smart shoe, a smart knee cover, and/or an electrode cap. The listed sensory devices are exemplarily only. Further different sensory devices may form part of the HMI instead.

In a favorable embodiment, the selection sensor or the trigger sensor comprise an electromagnetic field sensor, an optical sensor, an acceleration sensor, an orientation sensor and/or a position sensor and/or wherein the distance sensor comprises a laser device and a phase shift analyzer device. Again, the listed selection sensors, trigger sensors and distance sensors are exemplarily only. Further different selection sensors, trigger sensors and distance sensors may form part of the sensory device.

A fourth aspect of the invention is a system, comprising an HMI and a target device at least partially separate from the HMI and to be controlled by the HMI. The target device may comprise a component of the HMI, but must not comprise the HMI completely.

According to the invention, the system is configured for carrying out a method according to an embodiment of the invention when the HMI is operatively coupled to the target device. The HMI is configured as a hands-free remote control of the target device.

The target device exemplarily comprises an industrial robot or a vehicle. The list is exemplarily only. Further different target devices may form part of the system.

A fifth aspect of the invention is a computer program product, comprising a digital storage medium storing a program code. The digital storage medium may comprise a hard disk, a solid state disk (SSD) a digital versatile disk (DVD), a Universal Serial Bus (USB) stick, a random access memory (RAM) and the like and be provided locally or in a cloud connected to the internet, i.e. an internet cloud. The program code may be executed immediately from the storage medium or after an installation.

According to the invention, the program code causes a computing device to carry out a method according to an embodiment of the invention as a control unit of an HMI when being executed by a processor of the computing device. The program code provides the HMI with an inventive implementation.

An essential advantage of the inventive method is that it allows a user for activating a virtual control element displayed by a screen of a HMI easily and in any situation. Additionally, the HMI implementing the inventive method allows for an additional degree of freedom, namely related to a third dimension perpendicular to a two-dimensional surface of a screen of the HMI.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

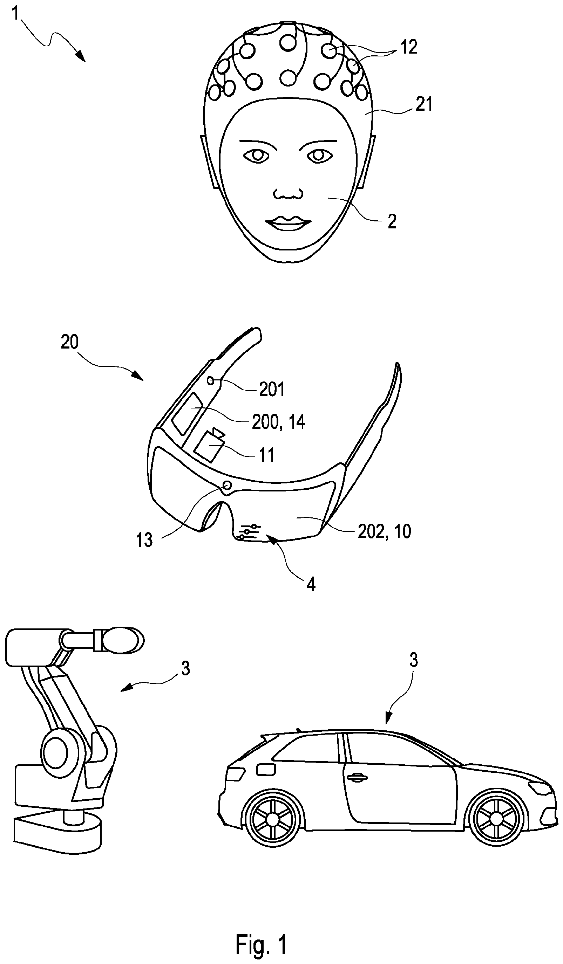

- Fig. 1: schematically shows a system according to an embodiment of the invention.

Fig. 1 schematically shows a system according to an embodiment of the invention. The system comprises a human-machine interface, HMI, 1. The HMI 1 comprises a screen 10, a selection sensor 11, a trigger sensor 12 and a control unit 14. The screen 10, the selection sensor 11 and the trigger sensor 12 are operatively coupled to the control unit 14. The selection sensor 11 or the trigger sensor 12 may comprise an electromagnetic field sensor, an optical sensor, an acceleration sensor, an orientation sensor and/or a position sensor.

The control unit 14 may be implemented by means of a computer program product. The computer program product comprises a digital storage medium storing a program code, the program code causing a computing device to carry out an inventive method method described below as the a control unit 14 of the HMI 1 when being executed by a processor of the computing device.

Exemplarily, the HMI 1 may comprise a head-mounted device, HMD, 20 wherein the HMD 20 comprises the screen 10, the selection sensor 11 and the control unit 14. The HMD 20 may further comprise the trigger sensor 12 and optionally a distance sensor 13. Alternatively, a sensory device 21 separate from the HMD 20 may comprise the trigger sensor 12 and optionally a distance sensor 13. The distance sensor 13 may comprise a laser device and a phase shift analyzer device.

The sensory device 21 may comprise smart cloths, a smart glove, a smart watch, a smart shoe, a smart knee cover, and/or an electrode cap. The sensory device 21 may be configured for being wirelessly coupled to the HMD 1, particularly using a Bluetooth protocol, a WLAN protocol or an NFC protocol.

The system may further comprise a target device 3 at least partially separate from the HMI 1 to be controlled by the HMI 1. The target device 3 may comprise an industrial robot or a vehicle. The system is configured for carrying out a method when the HMI 1 is operatively coupled to the target device 3.

The HMI 1 is configured for carrying out and is operated by carrying out the following method according to an embodiment of the invention.

The screen 10 of the HMI 1 displays a graphical user interface, GUI. The GUI comprises a virtual control element 4 or a plurality of virtual control elements 4.

The selection sensor 11 of the HMI 1 captures a selecting activity of a user 2 and provides a selection signal corresponding to the captured selecting activity. The selecting activity contactlessly selects the virtual control element 4. Preferably, the selection sensor 11 captures a spatial orientation of a face of the user 2 or an orientation of an eye of the user 2 towards the virtual control element 4 as the selecting activity.

The trigger sensor 12 of the HMI 1 captures a triggering activity of the user 2 and provides a trigger signal corresponding to the captured triggering activity. The triggering activity is different from the selecting activity and contactlessly activates the virtual control element 4. Preferably, the trigger sensor 12 captures a brain wave of the user 2 or a physical motion of the user 2 as the triggering activity.

For instance, the trigger sensor 12 captures a movement of a hand of the user 2, a movement of an arm of the user 2, a movement of a head of the user 2, a movement of a leg of the user 2, a movement of a foot of the user 2, a movement of an eye of the user 2, a movement of an eyelid of the user 2, a movement of an eyebrow of the user 2, a mimic movement of a face of the user 2, a thought of the user 2 or a combination thereof as the triggering activity.

The control unit 14 of the HMI 1 receives both the provided selection signal and the provided trigger signal and, caused by the received trigger signal, causes a function assigned to the selected virtual control element 4 to be executed.

The distance sensor 13 of the HMI 1 may detect a spatial distance of the distance sensor 13 from the virtual control element 4 and provide a distance signal corresponding to the detected spatial distance. The control unit 14 may receive the provided distance signal and causes the function to be executed when the distance signal matches the virtual control element 4.

Particularly, a function of the HMI 1 may be caused to be executed.

Alternatively, a function of the target device 3 at least partially separate from the HMI 1 and operatively coupled to the HMI 1 may be caused by the HMI 1 to be executed, wherein the HMI 1 carries out the method described above which eventually results in a method of operating the target device 3.

### Reference Numerals

- 1: human machine interface, HMI
- 10: screen
- 11: selection sensor
- 12: trigger sensor
- 13: distance sensor
- 14: control unit
- 2: user
- 20: head-mounted device
- 200: battery compartment
- 201: earphone
- 202: lens
- 21: sensory device
- 3: target device
- 4: virtual control element

## Claims

1. A method of operating a human machine interface, HMI, (1) wherein
- a screen (10) of a HMI (1) displays a graphical user interface, GUI, comprising a virtual control element (4);
- a selection sensor (11) of the HMI (1) captures a selecting activity of a user (2), the selecting activity contactlessly selecting the virtual control element (4), and provides a selection signal corresponding to the captured selecting activity;
- a trigger sensor (12) of the HMI (1) captures a triggering activity of the user (2) different from the selecting activity, the triggering activity contactlessly activating the virtual control element (4), and provides a trigger signal corresponding to the captured triggering activity;
- a control unit (14) of the HMI (1) receives both the provided selection signal and the provided trigger signal and, caused by the received trigger signal, causes a function assigned to the selected virtual control element (4) to be executed.

2. The method according to claim 1, wherein the trigger sensor (12) captures a brain wave of the user (2) or a physical motion of the user (2) as the triggering activity.

3. The method according to claim 1 or 2, wherein the selection sensor (11) captures a spatial orientation of a face of the user (2) or an orientation of an eye of the user (2) towards the virtual control element (4) as the selecting activity and/or the trigger sensor (12) captures a movement of a hand of the user (2), a movement of an arm of the user (2), a movement of a head of the user (2), a movement of a leg of the user (2), a movement of a foot of the user (2), a movement of an eye of the user (2), a movement of an eyelid of the user (2), a movement of an eyebrow of the user (2), a mimic movement of a face of the user (2), a thought of the user (2) or a combination thereof as the triggering activity.

4. The method according to one of claims 1 to 3, wherein a distance sensor (13) of the HMI (1) detects a spatial distance of the distance sensor (13) from the virtual control element (4) and provides a distance signal corresponding to the detected spatial distance, and the control unit (14) receives the provided distance signal and causes the function to be executed when the distance signal matches the virtual control element (4).

5. The method according to one of claims 1 to 4, wherein a function of the HMI (1) is executed.

6. A method of operating a target device (3), wherein a function of a target device (3) at least partially separate from a HMI (1) and operatively coupled to the HMI (1) is caused by the HMI (1) to be executed, the HMI (1) carrying out a method according to one of the preceding claims.

7. A human-machine interface, HMI, (1) comprising a screen (10), a selection sensor (11), a trigger sensor (12) and a control unit (14), wherein the HMI (1) is configured for carrying out a method according to one of claims 1 to 5, when the screen (10), the selection sensor (11) and the trigger sensor (12) are operatively coupled to the control unit (14).

8. The HMI (1) according to claim 7, wherein the HMI (1) comprises a head-mounted device, HMD, (20) wherein the HMD (20) comprises the screen (10), the selection sensor (11) and the control unit (14).

9. The HMI (1) according to claim 8, wherein the HMD (20) comprises the trigger sensor (12) and/or a distance sensor (13).

10. The HMI (1) according to claim 8, comprising a sensory device (21) separate from the HMD (20), the sensory device (21) configured for being wirelessly coupled to the HMD (20), particularly using a Bluetooth protocol, a WLAN protocol or an NFC protocol, and comprising the trigger sensor (12) and/or a distance sensor (13).

11. The HMI (1) according to claim 10, wherein the sensory device (21) comprises smart cloths, a smart glove, a smart watch, a smart shoe, a smart knee cover, and/or an electrode cap.

12. The HMI (1) according to one of claims 7 to 11, wherein the selection sensor (11) or the trigger sensor (12) comprise an electromagnetic field sensor, an optical sensor, an acceleration sensor, an orientation sensor and/or a position sensor and/or wherein the distance sensor (13) comprises a laser device and a phase shift analyzer device.

13. A system, comprising an HMI (1) according to one of claims 7 to 12 and a target device (3) at least partially separate from the HMI (1) to be controlled by the HMI (1), wherein the system is configured for carrying out a method according to one of claims 1 to 6 when the HMI (1) is operatively coupled to the target device (3).

14. The system according to claim 13, wherein the target device (3) comprises an industrial robot or a vehicle.

15. A computer program product, comprising a digital storage medium storing a program code, the program code causing a computing device to carry out a method according to one of claims 1 to 5 as a control unit (14) of an HMI (1) when being executed by a processor of the computing device.

## Amended claims

### Amended claims in accordance with Rule 137(2) EPC.

1. A method of operating a human machine interface, HMI, (1) wherein
- a screen (10) of a HMI (1) displays a graphical user interface, GUI, comprising a virtual control element (4);
- a selection sensor (11) of the HMI (1) captures a selecting activity of a user (2), the selecting activity contactlessly selecting the virtual control element (4), and provides a selection signal corresponding to the captured selecting activity;
- a trigger sensor (12) of the HMI (1) captures a brain wave of the user (2) as a triggering activity of the user (2) different from the selecting activity, the triggering activity contactlessly activating the virtual control element (4), and provides a trigger signal corresponding to the captured triggering activity;
- a control unit (14) of the HMI (1) receives both the provided selection signal and the provided trigger signal and, caused by the received trigger signal, causes a function assigned to the selected virtual control element (4) to be executed.

2. The method according to claim 1, wherein the selection sensor (11) captures a spatial orientation of a face of the user (2) or an orientation of an eye of the user (2) towards the virtual control element (4) as the selecting activity and/or the trigger sensor (12) captures a movement of a hand of the user (2), a movement of an arm of the user (2), a movement of a head of the user (2), a movement of a leg of the user (2), a movement of a foot of the user (2), a movement of an eye of the user (2), a movement of an eyelid of the user (2), a movement of an eyebrow of the user (2), a mimic movement of a face of the user (2), a thought of the user (2) or a combination thereof as the triggering activity.

3. The method according to claim 1 or 2, wherein a distance sensor (13) of the HMI (1) detects a spatial distance of the distance sensor (13) from the virtual control element (4) and provides a distance signal corresponding to the detected spatial distance, and the control unit (14) receives the provided distance signal and causes the function to be executed when the distance signal matches the virtual control element (4).

4. The method according to one of claims 1 to 3, wherein a function of the HMI (1) is executed.

5. A method of operating a target device (3), wherein a function of a target device (3) at least partially separate from a HMI (1) and operatively coupled to the HMI (1) is caused by the HMI (1) to be executed, the HMI (1) carrying out a method according to one of the preceding claims.

6. A human-machine interface, HMI, (1) comprising a screen (10), a selection sensor (11), a trigger sensor (12) and a control unit (14), wherein the HMI (1) is configured for carrying out a method according to one of claims 1 to 4, when the screen (10), the selection sensor (11) and the trigger sensor (12) are operatively coupled to the control unit (14).

7. The HMI (1) according to claim 6, wherein the HMI (1) comprises a head-mounted device, HMD, (20) wherein the HMD (20) comprises the screen (10), the selection sensor (11) and the control unit (14).

8. The HMI (1) according to claim 7, wherein the HMD (20) comprises the trigger sensor (12) and/or a distance sensor (13).

9. The HMI (1) according to claim 7, comprising a sensory device (21) separate from the HMD (2), the sensory device (21) configured for being wirelessly coupled to the HMD (2), particularly using a Bluetooth protocol, a WLAN protocol or an NFC protocol, and comprising the trigger sensor (12) and/or a distance sensor (13).

10. The HMI (1) according to one of claim 9, wherein the sensory device (21) comprises smart cloths, a smart glove, a smart watch, a smart shoe, a smart knee cover, and/or an electrode cap.

11. The HMI (1) according to one of claims 6 to 10, wherein the selection sensor (11) or the trigger sensor (12) comprise an electromagnetic field sensor, an optical sensor, an acceleration sensor, an orientation sensor and/or a position sensor and/or wherein the distance sensor (13) comprises a laser device and a phase shift analyzer device.

12. A system, comprising an HMI (1) according to one of claims 6 to 11 and a target device (3) at least partially separate from the HMI (1) to be controlled by the HMI (1), wherein the system is configured for carrying out a method according to claim 7 when the HMI (1) is operatively coupled to the target device (3).

13. The system according to claim 12, wherein the target device (3) comprises an industrial robot or a vehicle.

14. A computer program product, comprising a digital storage medium storing a program code, the program code causing a computing device to carry out a method according to one of claims 1 to 4 as a control unit (14) of an HMI (1) when being executed by a processor of the computing device.
